# EUROPÄISCHE PATENTSCHRIFT

(11) **EP 1 247 005 B1**
(45) Veröffentlichungstag und Bekanntmachung des Hinweises auf die Patenterteilung: **21.06.2006**
(21) Anmeldenummer: 00979317.5
(22) Anmeldetag: 13.12.2000
(51) Int. Cl.: F01L 1/047, F01L 1/344

(54) **WELLE ALS MASCHINENBAUTEIL MIT INTEGRIERTEN LEITUNGEN**
SHAFT PROVIDED AS A MACHINE PART WITH INTEGRATED CONDUITS
ARBRE SE PRESENTANT SOUS FORME DE PIECE MECANIQUE AVEC DES CONDUITES INTEGREES

(30) Priorität: 30.12.1999 CH 240099; 05.05.2000 CH 886002000
(43) Veröffentlichungstag der Anmeldung: 09.10.2002
(73) Patentinhaber: ThyssenKrupp Presta AG, 9492 Eschen (LI)
(72) Erfinder: SPECHT, Jean-Pierre, CH-9473 Gams (CH); SCHMITT, Thomas, FL-9491 Ruggell (LI)
(74) Vertreter: Wegmann, Urs
(86) Internationale Anmeldenummer: PCT/CH2000/000661
(87) Internationale Veröffentlichungsnummer: WO 2001/049978

(56) Entgegenhaltungen:
- EP-A- 0 510 327
- US-A- 5 273 007
- US-A- 5 476 075

## Beschreibung

Die Erfindung betrifft eine Welle als Maschinenbauteil mit integrierten Leitungen nach dem Oberbegriff des Anspruchs 1.

Drehgelagerte Wellen werden als Maschinenbauteil auf vielfältige Art und Weise eingesetzt. Sie dienen beispielsweise als Antriebswellen oder auch als Steuerwellen und übertragen entsprechende Rotationskräfte. In vielen Fällen ist es notwendig, innerhalb der Welle, welche drehbar gelagert ist, ein Medium wie Schmieröl oder Hydrauliköl durch Leitungen an entsprechende Verbrauchsstellen zu führen. Vor allem dann, wenn der Verbraucher selbst an der drehenden Welle, beispielsweise am Ende der Welle, angeordnet ist, ist eine leckfreie Zuführung des unter Druck stehenden Mediums nicht unproblematisch. Ein wichtiger Anwendungsbereich solcher Zuleitungen findet sich bei Nockenwellen für Verbrennungsmotoren. Die Nockenwellen sind entsprechend gelagert und dienen in bekannter Weise zur Ventilsteuerung. Am Ende einer solchen Nockenwelle wird zwischen Antriebsrad und der Welle beispielsweise ein Hydraulikaggregat angeordnet, welches ein gesteuertes Verdrehen der Welle gegenüber der Antriebsradposition ermöglichen soll, um die Verbrennung des Motors dreh- zahl- und lastabhängig optimal einstellen zu können. Dazu ist die Welle stirnseitig mit axialen Längsbohrungen versehen mit beispielsweise 3 bis 5 mm Durchmesser und einigen cm Länge, welche am Wellenende in das Verstellaggregat münden und auf der anderen Seite radial zur Welle Öffnungen aufweisen, welche im Lagerbereich mit Öl drehgedichtet gespiesen werden können.

Eine Welle mit integrierten Leitungen zur axialen Führung von Hydraulikmedien ist in der Patentschrift US 5,273,007 dargestellt. Die Welle ist in Teilabschnitten koaxial zweiteilig ausgebildet, mit einem inneren Wellenteil und einem darüber geschobenen äusseren Wellenteil und im Bereich der einander zugewandten Wellenoberflächen ist die Leitung als nutförmiger Kanal an einem der Wellenteile ausgebildet. Zur Ausbildung von Ölkanälen werden zusätzliche Einbauteile in die Rohrförmige Welle eingeschoben. Um das Öl in das System hinein zu führen die Einbringung von Bohrungen in das Rohr vorgesehen.

Diese bekannten Anordnungen haben den Nachteil, dass sie wegen den Tiefbohrungen äusserst schwierig zu fertigen sind, womit auch eine wirtschaftliche Fertigung von grossen stückzahlen an Grenzen stösst. Ausserdem ergibt sich das Problem, dass Späne aus den Tiefbohrungen und im Oberschneidungsbereich der Bohrungen schwer entfernbar sind und an den Kanten Gräte verbleiben können, die später im Betrieb zu Totalausfällen des Kraftfahrzeugmotors führen können. Im weiteren sind die engen Toleranzen beim Kanalverlauf bei den entsprechend beengten Platzverhältnissen schwierig einzuhalten.

Der vorliegenden Erfindung liegt die Aufgabe zugrunde die Nachteile des Standes der Technik zu vermeiden. Insbesondere ist es Aufgabe der Erfindung, eine einfach und wirtschaftlich herstellbare Wellenanordnung zu schaffen mit integrierten Leitungen, welche eine flexiblere Leitungsdimensionierung ermöglicht und einen sicheren Betrieb der an die Leitung angeschlossenen Aggregate.

Diese Aufgabe wird erfindungsgemäss durch die Merkmale des Anspruches 1 gelöst. Weitere vorteilhafte Ausführungsformen beinhalten die abhängigen Patentansprüche. Erfindungsgemäss werden die axialen Tieflochbohrungen in der Welle durch Kanäle ersetzt, dadurch dass mindestens ein Teil eine Endbereich der Welle im Bereich der Kanalführung mindestens koaxial zweiteilig ausgebildet ist, beispielsweise aus einem zusätzlichen inneren Wellenteil oder Rohrteil und einem darübergeschobenen äusseren rohrförmigen Wellenteil, wobei mindestens ein nutförmiger Kanal im Bereich der einander zugewandten Wellenteiloberflächen ausgebildet ist. Die Leitung, welche als nutförmiger Kanal ausgebildet ist, kann entweder an der Innenfläche des äusseren Rohrteiles und / oder an der Oberfläche des inneren Wellenteiles ausgebildet sein. Durch die ineinander geschobenen Wellenteile werden die dazwischenliegenden Kanäle entweder auf der Ober- oder Unterseite verschlossen und bilden so die gewünschten Leitungen in axialer Richtung. Die Kanäle können nutförmig ausgebildet werden und mit Zerspanen hergestellt werden, wobei aber vorgezogen wird, das Wellenteil durch Massivumformen wie Fliesspressen oder als gesicktes Rohr auszubilden. Dies ermöglicht eine besonders wirtschaftliche Herstellungsweise. Es können selbstverständlich, wo sinnvoll, auch Mischformen dieser verschiedenen Herstellverfahren verwendet werden. Ausserdem ist es auch ohne weiteres möglich, die Kanäle verdreht innerhalb der Welle oder sogar spiralförmig anzuordnen entlang der Achsrichtung, was mit Tiefbohrungen nicht möglich ist. Es können auch mehrere Kanäle durch koaxial getrennte Teilabschnitte erzeugt werden. Das Medium kann beispielsweise im Zentralbereich des Hohlwellenteiles zugeführt werden und in den darüber liegenden, durch die Wandung getrennten Kanälen zurückgeführt werden. Der Medienfluss kann selbstverständlich auch in umgekehrter Richtung erfolgen. Mit solch einer Anordnung kann der Wellendurchmesser für die Medienführung optimal genutzt werden.

Diese Bauweise ermöglicht eine Vielzahl von möglichen Leitungsformen auf einfache Weise zu realisieren, um vor allem Hydraulikmedien, die unter hohem Druck stehen, zuverlässig im Endbereich einer Welle vorzugsweise einer Nockenwelle an ein Aggregat zu führen, insbesondere an ein Nockenwellenverstellaggregat. Die erfindungsgemässe Lösung ermöglicht ausserdem auch, grössere Querschnitte zu erzeugen und geeignetere Leitungsführungen, was weniger Verluste verursacht. Dadurch ist es auch möglich, andere Medien als Hydrauliköl, wie beispielsweise gasförmige Medien zuverlässig innerhalb einer Welle an einen mitdrehenden Verbraucher zu führen. Ausserdem können längere Leitungen von mehr als 40 mm ohne Probleme erzeugt werden. Beispielsweise bei Nockenwellen vorzugsweise im Bereich von 40 bis 100 mm Leitungslänge.

Die Erfindung wird nun beispielsweise mit schematischen Figuren beschrieben. Es zeigen:
- Fig. 1a: ein Längsschnitt durch eine an sich bekannte Welle mit koaxial angeordnetem Innenrohr mit eingepressten Kanälen
- Fig. 1b: ein Querschnitt durch die Anordnung gemäss Fig. 1a
- Fig. 1c: ein weiterer Längsschnitt der Anordnung nach Fig. 1a entlang der Schnittlinie G-G
- Fig. 1d: ein weitere Längsschnitt entsprechend der Ausführung nach Fig. 1a entlang der Schnittebene H-H
- Fig. 2a: eine erfindungsgemässe Ausführungsform
- Fig. 2b: ein Querschnitt durch die Ausführung gemäss Fig. 2a
- Fig. 2c: ein Längsschnitt entlang der Ebene A-A der Ausführung nach Fig. 2a
- Fig. 2d: eine Darstellung in Perspektive gemäss der Ausführung nach Fig. 2a
- Fig. 3a: eine Darstellung in Seitenansicht eines separaten Wellenstück mit integrierten Leitungen, welches mit der Hauptwelle verbunden wird
- Fig. 3b: ein Querschnitt des Wellenstücks gemäss Fig. 3a

- Fig. 3c: ein Längsschnitt des Wellenstücks gemäss Fig. 3a entlang der Schnittebene A-A
- Fig. 3d: ein Längsschnitt gemäss Wellenstück nach Fig. 3a entlang der Schnittebene B-B

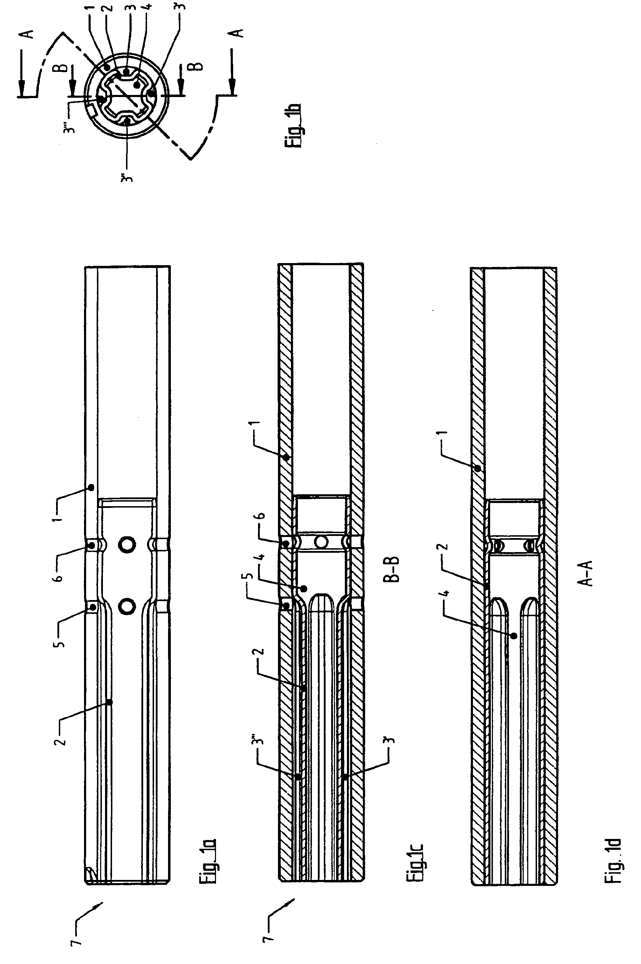

Eine an sich bekannte Ausführung einer koaxial zweiteiligen Welle mit integrierten Leitungen ist in Fig. 1a im Längsschnitt dargestellt. Die Welle besteht aus einem rohrförmigen äusseren Wellenteil 1, in welches am einen Wellenende koaxial ein inneres Wellenteil 2 eingeschoben ist. Das innere Wellenteil 2 ist rohrförmig ausgebildet und ist als massivumgeformtes Bauteil hergestellt oder als gesicktes Rohr, in welches Längsnuten 3, 3', 3", 3"' eingedrückt sind, wie dies auch aus dem Querschnitt nach Fig. 1b ersichtlich ist. Das innere Wellenteil 2 liegt im äussersten Durchmesser an der Innenwandung des äusseren Wellenteil 1 an und trennt somit die Vertiefungen am inneren Wellenteil 2 gegen einander ab und bildet dadurch kanalförmige Leitungen 3 aus. Das innere Wellenteil 2, wird so lange ausgebildet, wie die Kanallänge es erfordert und ist in der Regel wesentlich kürzer als das äussere Wellenteil 1, welches beispielsweise eine Nockenwelle bildet. Das innere Wellenteil wird zum Abschluss der Kanäle 3 nicht durchgehend eingeformt, so dass das innere Wellenteil in diesem Bereich gegenüber dem äusseren Wellenteil abdichtend wirkt. Am äusseren Wellenteil 1 können Öffnungen 5, 6 angeordnet werden, welche in die Leitungen 3 einmünden. Die Öffnungen können beispielsweise als Bohrungen oder als Einfräsungen ausgebildet werden. Durch diese Öffnungen kann ein Medium zu und / oder abgeführt werden, welches am Ende der Welle den dort angeordneten Verbraucher speist. Das Ende der Welle 1 ist beispielsweise als Anschluss 7 für ein Aggregat, welches mit dem Medium betrieben wird, ausgebildet. Vorzugsweise dient eine solche Anordnung zum Betrieb einer Nockenwelle in Verbrennungsmotoren und insbesondere zum Betrieb einer hydraulischen Verstellvorrichtung, welche am Nockenwellenende 7 angebracht ist. Solche Aggregate können beispielsweise nur druckbeaufschlagt werden oder sie können auch als eine Art Hydraulikmotor ausgebildet werden, wozu dann die Leitungen 3 als Zuführ- und Rückführleitungen ausgebildet sind. Bevorzugterweise werden die Kanäle 3 bis 3"' parallel als Zu- bzw. Rückführleitung betrieben und das rohrförmige innere Wellenteil 2 ebenfalls als Leitung für die Zu- bzw. Rückführung. Dazu sind Öffnungen 6 an der Welle 1 vorgesehen, welche in den Innenbereich des hohlen Wellenteils 2 münden, welches dort gegenüber dem Innenbereich der Welle 1 mit einem Deckel abgeschlossen ist, wie dies in den Längsschnitten in Fig. 1c und 1d dargestellt ist.

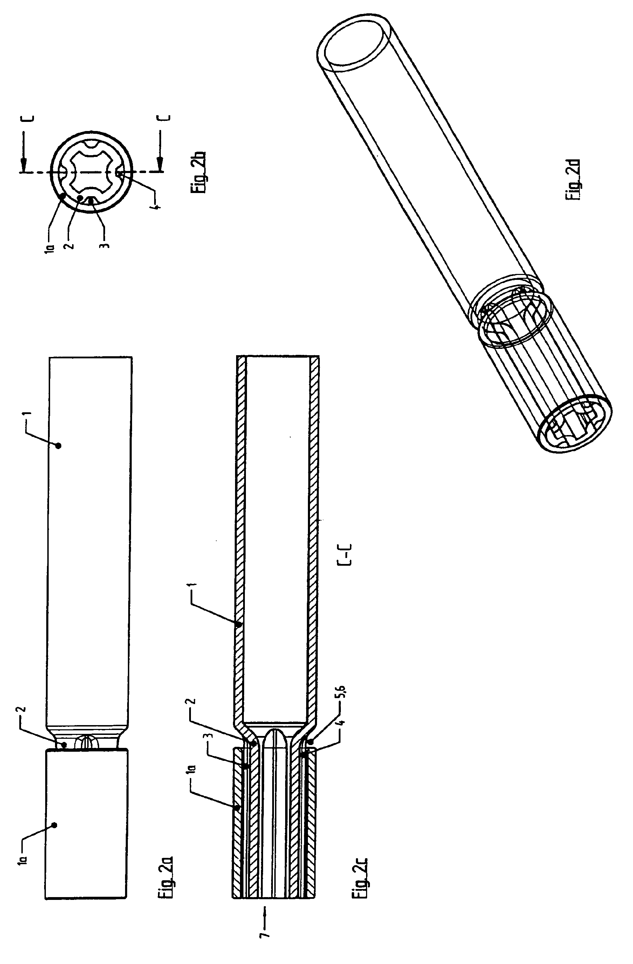

In Fig. 2a ist in Seitenansicht eine erfindungsgemässe Ausführungsform dargestellt. Hier wird eine rohrförmige Hauptwelle 1 im Endbereich, wo Leitungen benötigt werden, auf einem kleineren Durchmesser verformt und gleichzeitig die benötigten Kanäle 3, 4 eingeformt, wie aus dem Längsschnitt in Fig. 2c und dem Querschnitt in Fig. 2b ersichtlich ist. Dies kann wieder vorteilhafterweise mit Kaltumformtechniken erzeugt werden. Über diesen Teilbereich der Welle 1 wird dann wiederum abschliessend ein äusseres Wellenstück 1a geschoben, welches die Kanäle 3, 4 abschliessend ausbildet und genügend dicht voneinander trennt. Von der dem

Wellenende abgewandten Seite kann das äussere Wellenstück 1a in axialer Richtung von der Welle 1 etwas beabstandet angeordnet werden, beispielsweise einige mm, so dass die ausgebildeten Kanäle 3, 4 nach aussen Öffnungen 5, 6 aufweisen, wo wiederum das Medium eingespeist und / oder rückgeführt werden kann. Das Wellenende, wo die Kanäle 3, 4 stirnseitig austreten, ist als Aggregatanschluss 7 für den Anschluss beispielsweise einer Nockenwellenverstelleinrichtung ausgebildet. Fig. 2d zeigt eine perspektivische Ansicht dieser Anordnung.

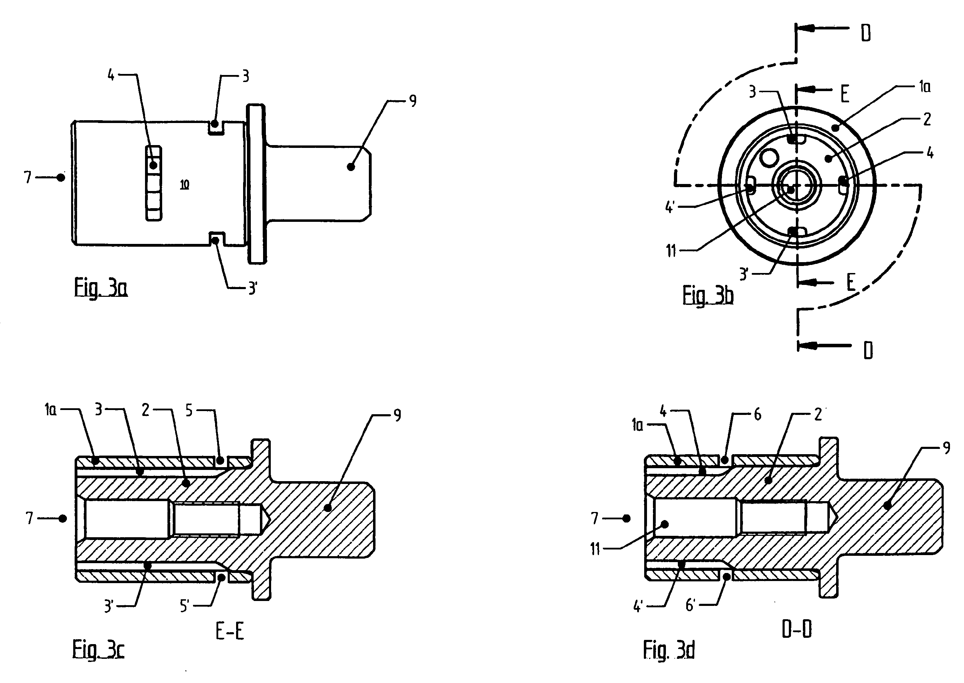

In Fig. 3a ist eine weiter Variante dargestellt, wobei das die Leitungen 3, 4 führende Wellenteil 10 als separates Wellenstück 10 ausgebildet ist und mit der Hauptwelle, wo keine Leitungen benötigt werden, verbunden wird. Diese Ausführung hat den Vorteil, dass das leitungsführende Wellenstück 10 als separates Bauteil hergestellt werden kann gegenüber einer relativ langen Hauptwelle. Dieses Wellenstück 10 wird mit geeigneten Mitteln 9, beispielsweise mit einem Anschlusszapfen 9 mit der Hauptwelle verbunden, zum Beispiel durch Verpressen. Das Wellenstück 10 ist am einen Anschlussende wiederum als Aggregatanschluss ausgebildet, welches die Zuführung von Hydraulikmedien ermöglicht. Das Wellenstück 10 besteht wiederum aus einem inneren Wellenteil, das in diesem Fall als Massivteil oder aber auch als Rohrteil ausgeführt werden kann und durch Bearbeitung der Oberfläche nutförmige Kanäle 3, 4 aufweist. Die Leitungen 3, 4 können gefräst sein oder aber mit Vorteil durch Kaltumformen hergestellt werden. Geschlossen werden die Nuten wiederum durch ein über das Wellenstück 10 gestülptes, äusseres Wellenstück 1a, welches wiederum entsprechende Öffnungen aufweist, die mit den Kanälen kommunizieren und es ermöglichen, das Medium zu und /oder abzuführen. Vorzugsweise weist das äussere Wellenstück 1a den gleichen Aussendurchmesser auf wie derjenige der Hauptwelle 1. Je nach Anschlusssituation können aber die Durchmesser auch unterschiedlich gewählt werden. In Fig. 3b ist ein Querschnitt des Wellenstück 10 dargestellt und in den Figuren 3c und 3d je ein Längsschnitt, woraus die paarweise um 90° versetzt angeordneten Kanäle 3, 3', 4, 4 ` ersichtlich sind mit den entsprechend versetzt angeordneten Medienversorgungsöffnungen 5, 5', 6, 6'.

Das Kanal - führende innere Wellenteil 2 oder das Wellenstück 10 können auch kostengünstig als Frästeil, insbesondere als Extrudierteil und vor allem als Gussteil ausgeführt werden. Hierbei ist das Spritzgussverfahren bzw. das Druckgussverfahren besonders vorteilhaft anzuwenden. Geeignete Materialien welche eine hohe Produktivität bei gutem Kosten-Nutzverhältnis ermöglichen, sind hierbei Leichtmetalle wie Aluminium und dessen Legierungen. Noch besser geeignet sind hierzu Kunststoffe, da diese besonders einfach in Gusstechnik zu bearbeiten sind.

## Patentansprüche

1. Welle als Maschinenbauteil mit integrierten Leitungen (3, 4) zur axialen Führung von Medien, insbesondere Hydraulikmedien, wobei die Welle rohrförmig ausgebildet ist und mindestens in Teilabschnitten koaxial mindestens zweiteilig ausgebildet ist mit einem inneren Wellenteil (2) und einem darüber geschobenen äusseren Wellenteil (1), wobei im Bereich der einander zugewandten Wellenteiloberflächen die Leitung (3, 4) als nutförmiger Kanal (3, 4) an mindestens einem der Wellenteile (1, 1a, 2) ausgebildet ist **dadurch gekennzeichnet, dass** die Welle (1) im Endbereich, ein Teilbereich auf kleinerem Durchmesser, Kanäle (3, 4) eingearbeitet sind und diese mit einem äusseren zusätzlichen rohrförmigen Wellenstück (1a) abgeschlossen sind, wobei zwischen Welle (1) und Wellenstück (1a) eine Öffnung (5, 6) zur Einspeisung des Hydraulikmediums vorgesehen ist.

2. Welle nach Anspruch 1 **dadurch gekennzeichnet, dass** Mittel (11) vorgesehen sind zum Anschluss eines drehenden Hydraulikaggregates an die Welle und dieses mit den Kanälen (3, 4) koppelbar ist, wobei diese Mittel vorzugsweise im Wellenendbereich (7) vorgesehen sind.

3. Welle nach Anspruch 2 **dadurch gekennzeichnet, dass** mindestens zwei Kanäle (3, 4) vorgesehen sind, welche als Hin- und Rückführleitung des hydraulikbetriebenen Aggregates dienen und / oder eine der Leitungen (4) durch ein hohles, rohrförmiges inneres Wellenteil (2) ausgebildet ist.

4. Welle nach einem der vorhergehenden Ansprüche **dadurch gekennzeichnet, dass** der Kanal (3, 4) gegen ein Wellenende (7) geführt ist und die Welle in einem Teilabschnitt eine Öffnung (5, 6) nach aussen aufweist, welcher mit dem Kanal (3, 4) in Verbindung steht zur Einspeisung und / oder Abführung eines Hydraulikmediums.

5. Welle nach einem der vorhergehenden Ansprüche **dadurch gekennzeichnet, dass** der Kanal (3, 4) an einem inneren Wellenteil (2) ausgebildet ist, vorzugsweise als Profilteil, vorzugsweise als massivumgeformtes Teil oder als gesicktes Rohrteil.

6. Welle nach einem der vorhergehenden Ansprüche **dadurch gekennzeichnet, dass** ein koaxiales zweiteiliges Wellenstück (10) mit Leitungskanälen (3, 4) mit der Welle verbunden ist.

7. Welle nach einem der vorhergehenden Ansprüche **dadurch gekennzeichnet, dass** diese eine Welle für einen Verbrennungsmotor ist, insbesondere eine Nockenwelle.

8. Welle nach Anspruch 7 **dadurch gekennzeichnet, dass** am Ende der Welle ein Hydraulikaggregat angeordnet ist zur Drehwinkelverstellung zwischen Nockenwelle und Nockenwellenantrieb.

9. Welle nach einem der vorhergehenden Ansprüche **dadurch gekennzeichnet, dass** die Leitungslänge in axial Komponente mindestens 40 mm ist, vorzugsweise im Bereich von 40 bis 100 mm.

10. Welle nach einem der vorhergehenden Ansprüche **dadurch gekennzeichnet, dass** mindestens zwei Kanäle (3, 4) durch koaxial getrennte Teilabschnitte ausgebildet sind.

11. Welle nach einem der vorhergehenden Ansprüche **dadurch gekennzeichnet, dass** das innere Wellenteil (2) und/oder das Wellenstück (10) als Frästeil, Extrudierteil, insbesondere als Gussteil, wie als Spritzgussteil ausgebildet ist.

12. Welle nach Anspruch 11 **dadurch gekennzeichnet, dass** das innere Wellenteil (2) oder das Wellenstück (10) aus Leichtmetall wie Aluminium oder dessen Legierungen besteht, vorzugsweise aus einem Kunststoff besteht.

## Claims

1. Shaft as machine component with integral lines (3, 4) for axial transport of media, in particular hydraulic media, where the shaft is formed tubular and at least in part sections is formed coaxially in at least two parts with an inner shaft part (2) and arranged thereover an outer shaft part (1), where in the area of the shaft part surfaces facing each other the line (3, 4) is formed as a grooved channel (3, 4) on at least one of the shaft parts (1, 1a, 2), **characterised in that** in the end area of the shaft (1), a part area of smaller diameter, are machined channels (3, 4) that are closed with an outer additional tubular shaft piece (1a), where between the shaft (1) and shaft piece (1a) is provided an orifice (5, 6) for introduction of the hydraulic medium.

2. Shaft according to claim 1, **characterised in that** means (11) are provided for connection to the shaft of a rotating hydraulic apparatus that can be connected with the channels (3, 4), these means preferably being provided in the shaft end area (7).

3. Shaft according to claim 2, **characterised in that** at least two channels (3, 4) are provided which serve as the feed and return line of the hydraulically operated apparatus and/or one of the lines (4) is formed by a hollow tubular inner shaft part (2).

4. Shaft according to any of the preceding claims, **characterised in that** the channel (3, 4) is guided towards a shaft end (7) and the shaft in a part section has an opening (5, 6) towards the outside which is connected with the channel (3, 4) for the feed and/or discharge of a hydraulic medium.

5. Shaft according to any of the previous claims, **characterised in that** the channel (3, 4) is formed on an inner shaft part (2), preferably as a profiled part, preferably as a formed part or a beaded tube part.

6. Shaft according to any of the previous claims, **characterised in that** a coaxial two-part shaft piece (10) with line channels (3, 4) is connected with the shaft.

7. Shaft according to any of the preceding claims, **characterised in that** this is a shaft for a combustion engine, in particular a camshaft.

8. Shaft according to claim 7, **characterised in that** on the end of the shaft is arranged a hydraulic device for setting the rotary angle between the camshaft and the camshaft drive.

9. Shaft according to any of the preceding claims, **characterised in that** the line length in the axial component is at least 40mm, preferably in the range from 40 to 100mm.

10. Shaft according to any of the previous claims, **characterised in that** at least two channels (3, 4) are formed by coaxially separate part sections.

11. Shaft according to any of the preceding claims, **characterised in that** the inner shaft part (2) and/or the shaft piece (10) are formed as a milled, extruded, in particular cast part or as an injection moulding.

12. Shaft according to claim 11, **characterised in that** the inner shaft part (2) or the shaft piece (10) comprise an alloy such as aluminium or its alloys, preferably a plastics material.

## Revendications

1. Arbre en tant que pièce mécanique comprenant des conduites intégrées (3, 4) pour le transport axial de fluides, en particulier de fluides hydrauliques, dans lequel l'arbre est en forme de tube, configuré -au moins par tronçons- en deux segments au minimum dans le sens coaxial, avec un segment d'arbre intérieur (2) et un segment d'arbre extérieur (1) glissé sur le premier, et dans lequel la conduite (3, 4) est réalisée, du côté des faces en vis-à-vis des segments d'arbre, en tant que canal (3, 4) en forme de gorge pratiquée dans au moins un des segments d'arbre (1, 1a, 2), **caractérisé en ce que** dans la zone d'extrémité de l'arbre, qui est un tronçon de plus petit diamètre, il est intégré des canaux (3, 4) qui sont fermés par le biais d'un segment d'arbre extérieur supplémentaire (1a) en forme de tube, un orifice (5, 6) d'introduction du fluide hydraulique étant prévu entre l'arbre (1) et le segment d'arbre (1a).

2. Arbre selon la revendication 1, **caractérisé en ce qu'**il est prévu des moyens (11) pour raccorder à l'arbre un groupe hydraulique tournant et **en ce que** ce groupe peut être connecté aux canaux (3, 4), lesdits moyens étant prévus, de préférence, dans la zone d'extrémité (7) de l'arbre.

3. Arbre selon la revendication 2, **caractérisé en ce qu'**il est prévu au moins deux canaux (3, 4) servant de conduite d'alimentation et de retour pour le groupe hydraulique et/ou **en ce que** l'une (4) des conduites est formée par un segment d'arbre intérieur (2) creux en forme de tube.

4. Arbre selon l'une quelconque des revendications précédentes, **caractérisé en ce que** le canal (3, 4) aboutit contre une extrémité d'arbre (7) et **en ce que** l'arbre comprend sur un tronçon un orifice (5, 6) vers l'extérieur qui est relié au canal (3, 4) pour l'introduction et/ou l'évacuation d'un fluide hydraulique.

5. Arbre selon l'une quelconque des revendications précédentes, **caractérisé en ce que** le canal (3, 4) est réalisé dans un segment d'arbre intérieur (2) qui est, de préférence, un segment profilé, de préférence un segment formé dans la masse ou un segment de tube mouluré.

6. Arbre selon l'une quelconque des revendications précédentes, **caractérisé en ce qu'**il y a, relié à l'arbre, un tronçon d'arbre (10) en deux parties coaxiales comprenant des canaux de conduite (3, 4).

7. Arbre selon l'une quelconque des revendications précédentes, **caractérisé en ce que** cet arbre est destiné à un moteur à combustion, en particulier à un arbre à cames.

8. Arbre selon la revendication 7, **caractérisé en ce qu'**à l'extrémité de l'arbre, il est disposé un groupe hydraulique destiné à régler l'écart angulaire entre l'arbre à cames et l'entraînement d'arbre à cames.

9. Arbre selon l'une quelconque des revendications précédentes, **caractérisé en ce que** la longueur de la conduite dans le sens axial est d'au moins 40 mm, de préférence comprise entre 40 et 100 mm.

10. Arbre selon l'une quelconque des revendications précédentes, **caractérisé en ce qu'**il est formé au moins deux canaux (3, 4) par le biais de tronçons coaxialement séparés.

11. Arbre selon l'une quelconque des revendications précédentes, **caractérisé en ce que** le segment d'arbre intérieur (2) et/ou le tronçon d'arbre (10) est une pièce fraisée ou extrudée, en particulier une pièce moulée telle que pièce moulée par injection.

12. Arbre selon la revendication 11, **caractérisé en ce que** le segment d'arbre intérieur (2) ou le tronçon d'arbre (10) est composé d'un métal léger tel que l'aluminium ou des alliages d'aluminium, mais composé de préférence d'une matière plastique.
